# EUROPÄISCHE PATENTSCHRIFT

(11) **EP 2 327 487 B1**
(45) Veröffentlichungstag und Bekanntmachung des Hinweises auf die Patenterteilung: **22.08.2012**
(21) Anmeldenummer: 10186641.6
(22) Anmeldetag: 06.10.2010
(51) Int. Cl.: B21D 28/00, B21D 37/04, B21D 53/88, B60S 1/34, B21D 24/00, B21D 35/00

(54) **Stanzwerkzeug und Verfahren zum Herstellen eines Befestigungsteils eines Wischarms**
Stamping tool and method for producing an attachment piece of a wiper arm
Outil d'estampillage et procédé de fabrication d'une pièce de fixation d'une lame d'essuyage

(30) Priorität: 27.11.2009 DE 102009047208
(43) Veröffentlichungstag der Anmeldung: 01.06.2011
(73) Patentinhaber: Robert Bosch GmbH, 70442 Stuttgart (DE)
(72) Erfinder: Karaman, Sinan, 77833 Ottersweier-Unzhurst (DE)

(56) Entgegenhaltungen:
- EP-A1- 0 579 550
- EP-A1- 0 841 228
- EP-A2- 1 221 401
- DE-A1- 3 515 329
- DE-A1- 19 615 867
- US-A- 4 550 588
- US-A- 5 247 825
- US-A1- 2004 163 198

## Beschreibung

Die Erfindung betrifft ein Stanzwerkzeug gemäß Patentanspruch 1 und ein Verfahren zum Herstellen eines Befestigungsteils gemäß Patentanspruch 7.

### Stand der Technik

Aus DE 69618963 T2 ist es bekannt, einen Wischarm für einen Scheibenwischer mit Hilfe eines Stanzvorgangs herzustellen.

Aus DE 3515329-A ist ein Verfahren zur Herstellung von Anschlußköpfe für ein Scheibenwischerelement bekannt.

### Offenbarung der Erfindung

Die Aufgabe der Erfindung besteht darin, ein verbessertes Stanzwerkzeug zur Herstellung eines Befestigungsteils eines Wischarms eines Scheibenwischers und ein verbessertes Verfahren zum Herstellen von unterschiedlich ausgebildeten Befestigungsteilen eines Wischarms bereitzustellen.

Die Aufgabe der Erfindung wird durch das Stanzwerkzeug gemäß Patentanspruch 1 und durch das Verfahren gemäß Patentanspruch 7 gelöst.

Ein Vorteil des Stanzwerkzeugs und des Verfahrens besteht darin, dass verschiedene Befestigungsteile des Wischarms des Scheibenwischers mit geringer Modifikation des Stanzwerkzeugs hergestellt werden können.

Somit kann die Fertigung verschiedener Befestigungsteile kostengünstiger und schneller ausgeführt werden.

Dies wird dadurch erreicht, dass das Stanzwerkzeug modular aufgebaut ist, wobei wenigstens ein Stanzwerkzeugteil durch ein anderes Stanzwerkzeugteil ersetzt werden kann. Damit ist es zur Herstellung von zwei verschiedenen Befestigungsteilen nur erforderlich, zwei unterschiedliche Stanzwerkzeugteile zu verwenden. Die übrigen Stanzwerkzeugteile des Stanzwerkzeugs müssen nicht geändert werden. Zudem ist die Rüstzeit durch den Austausch von nur zwei Stanzwerkzeugteilen relativ kurz.

Weitere vorteilhafte Ausführungsformen der Erfindung sind in den abhängigen Ansprüchen angegeben.

In einer weiteren Ausführungsform sind die Befestigungsmittel für das erste und das dritte Stanzwerkzeugteil in der Weise ausgebildet, dass die Position des ersten und des dritten Stanzwerkzeugteils verändert werden können. Damit ist es beispielsweise möglich, unterschiedlich lange zweite Stanzwerkzeugteile zwischen dem ersten und dem dritten Stanzwerkzeugteil einzusetzen.

In einer weiteren Ausführungsform sind das erste und das dritte Stanzwerkzeugteil in der Weise ausgebildet, dass beim Formen des Befestigungsteils Befestigungsmittel zum Befestigen des Befestigungsteils an einer Drehachse bzw. zur Befestigung eines Wischerträgers vorgesehen ist. Somit ist das zweite Stanzwerkzeugteil, das nur einfache Umformungen vorzunehmen hat, einfach und kostengünstig aufgebaut. Damit werden zusätzlich Kosten reduziert, da das zweite Stanzwerkzeugteil, das für die Herstellung von unterschiedlich ausgebildeten Befestigungsteilen in verschieden langen Formen vorliegt, kostengünstig ist. Somit muss nur das einfach aufgebaute Stanzwerkzeugteil in verschiedenen Formen vorhanden sein.

Die Erfindung wird anhand der Figuren näher erläutert. Es zeigen:
- Figur 1 ein Befestigungsteil eines Wischarms eines Scheibenwischers,
- Figur 2 schematische Darstellungen von unterschiedlich aufgebauten Befestigungsteilen,
- Figur 3 eine schematische Darstellung von links und rechts gebogenen Befestigungsteilen,
- Figur 4 eine schematische Darstellung des Stanzwerkzeugs,
- Figur 5 eine weitere Darstellung des Stanzwerkzeugs,
- Figur 6 eine schematische Darstellung der Befestigungsmittel der Druckplatte, und
- Figur 7 eine schematische Darstellung der Befestigungsmittel der Stanzwerkzeugteile.

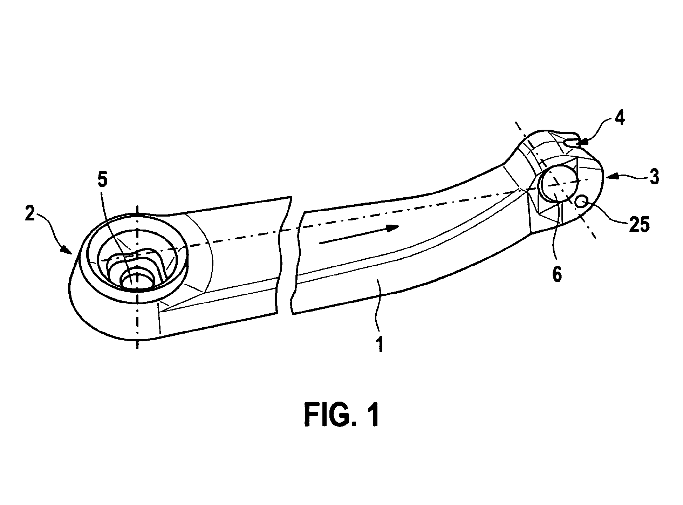

Figur 1 zeigt ein Befestigungsteil 1, das an einem ersten Ende ein erstes Verbindungsmittel 2 zum Verbinden des Befestigungsteils 1 mit einer Antriebswelle eines Scheibenwischersystems aufweist. Am zweiten gegenüberliegenden Ende weist das Befestigungsteil 1 ein zweites Verbindungsmittel 3 zum Verbinden des Befestigungsteils 1 mit einem nicht dargestellten Trägerarm mit Wischblatt auf. In der dargestellten Ausführungsform ist das erste Verbindungsmittel 2 in Form einer durchgehenden Öffnung 5 ausgebildet, durch die die Antriebswelle gesteckt wird und das Befestigungsteil 1 über eine Schraubverbindung an der Antriebswelle befestigt wird. Die durchgehende Öffnung 5 weist eine Vertiefung auf, die mit Hilfe eines Stanzvorgangs tiefgezogen wird. Das Befestigungsteil 1 wird beispielsweise mit Hilfe eines Stanz- und Schneidvorgangs aus einem Blech geformt.

Das zweite Verbindungsmittel 3 weist eine zweite durchgehende Öffnung 6 auf, die jedoch quer zu einer Längsachse des Befestigungsteils 1 und quer zur ersten durchgehenden Öffnung 5 angeordnet ist. Weiterhin ist das zweite Verbindungsmittel 3 im Endbereich abgerundet ausgebildet und weist zudem einen Einschnitt 4 zur Aufnahme des Trägerarms auf. Das zweite Verbindungsmittel 3 wird ebenfalls durch einen Stanz- und Schneidvorgang geformt.

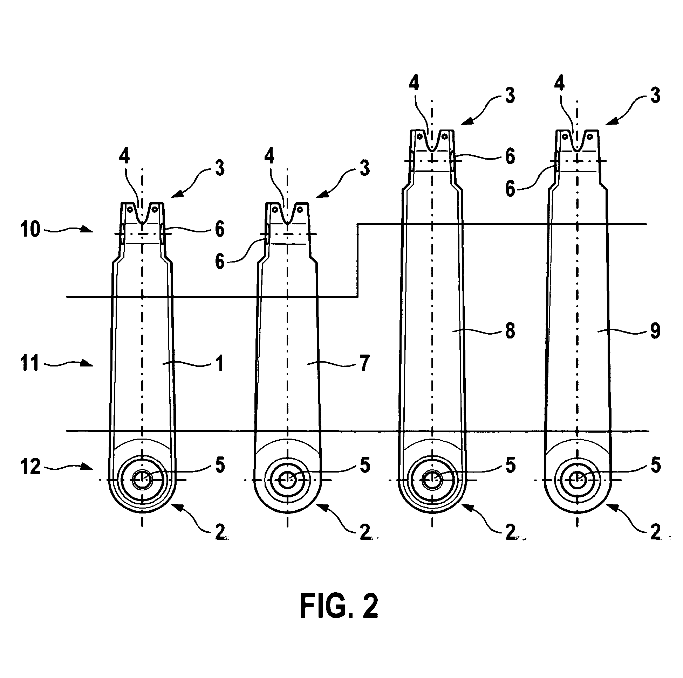

Für unterschiedliche Fahrzeugtypen sind unterschiedlich ausgebildete Befestigungsteile, insbesondere unterschiedlich lange Befestigungsteile erforderlich. Figur 2 zeigt eine schematische Darstellung von vier Befestigungsteilen 1, 7, 8, 9. Das erste Befestigungsteil 1 entspricht dem Befestigungsteil der Figur 1. Das zweite Befestigungsteil 7 entspricht im Wesentlichen dem ersten Befestigungsteil 1, wobei jedoch das erste Verbindungsmittel 2 eine andere Kontur als das erste Verbindungsmittel 2 des ersten Befestigungsteils 1 aufweist. Das dritte Befestigungsteil 8 weist die gleichen ersten und zweiten Verbindungsmittel 2, 3 wie das erste Befestigungsteil 1 auf, ist jedoch länger ausgebildet. Das vierte Befestigungsteil 9 weist die gleichen ersten und zweiten Verbindungsmittel 2, 3 wie das zweite Befestigungsteil 7 auf, wobei jedoch das vierte Befestigungsteil 9 länger ausgebildet ist.

Für den Entwurf von Stanzwerkzeugteilen, mit denen die Befestigungsteile 1, 7, 8, 9 hergestellt werden können, können die Befestigungsteile 1, 7, 8, 9 in drei Abschnitte 10, 11, 12 unterteilt werden. Der erste Abschnitt 10 umfasst das erste Verbindungsmittel 2 der Befestigungsteile 1, 7, 8 und 9, der zweite Abschnitt 11 umfasst einen Mittelbereich der Befestigungsteile 1, 7, 8, 9 und der dritte Abschnitt 12 umfasst das zweite Verbindungsmittel 3 der Befestigungsteile 1, 7, 8, 9.

Eine Idee der Erfindung besteht darin, das Stanzwerkzeug in der Weise modular auszubilden, dass der erste Abschnitt 10 des Befestigungsteils 1 mit einem ersten Stanzwerkzeugteil und der zweite Abschnitt 11 des Befestigungsteils 1 mit einem zweiten Stanzwerkzeugteil und der dritte Abschnitt 12 des Befestigungsteils 1 mit einem dritten Stanzwerkteil abgeformt wird. Dies bietet den Vorteil, dass das Stanzwerkzeugteil für den ersten Abschnitt 10 für das erste und das dritte Befestigungsteil 1, 8 und das Stanzwerkzeugteil für den dritten Abschnitt 12 für das erste und das dritte Befestigungsteil 1, 8 gleich ausgebildet sind. Somit kann für die Herstellung des ersten und des dritten Befestigungsteils 1, 8 das gleiche erste und dritte Stanzwerkzeugteil verwendet werden. Für die Ausbildung des zweiten Abschnitts 11 sind für das erste und das dritte Befestigungsteil 1, 8 zwei unterschiedliche zweite Stanzwerkzeugteile erforderlich, die unterschiedlich lang sind.

In der gleichen Weise können der erste und der dritte Abschnitt 10, 12 des zweiten und des vierten Befestigungsteils 7, 9 mit den gleichen ersten und dritten Stanzwerkzeugteilen hergestellt werden. Der zweite Abschnitt 11 des zweiten und des vierten Befestigungsteils 7, 9 müssen mit zwei unterschiedlichen zweiten Stanzwerkzeugteilen hergestellt werden. Aufgrund dieser Einteilung und Ausbildung der Stanzwerkzeugteile wird eine erhöhte Flexibilität des Stanzwerkzeugs erreicht. Somit können verschiedene Typen von Befestigungsteilen, die sich beispielsweise nicht im ersten und im zweiten Verbindungsmittel 2, 3 unterscheiden, mit geringen Werkzeugkosten für das Stanzwerkzeug hergestellt werden.

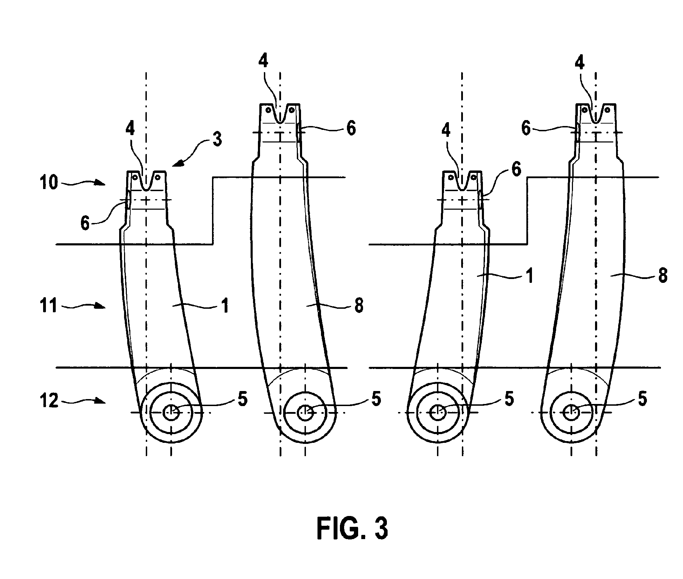

Figur 3 zeigt die Einteilung in einen ersten, zweiten und dritten Abschnitt für links bzw. rechts gekrümmte Befestigungsteile.

Auch in diesen Ausführungsformen können zwei unterschiedliche Typen von Befestigungsteilen mit gleichen Stanzwerkzeugteilen für den ersten und den dritten Abschnitt aber mit unterschiedlichen Stanzwerkzeugteilen für den zweiten Abschnitt 11 hergestellt werden.

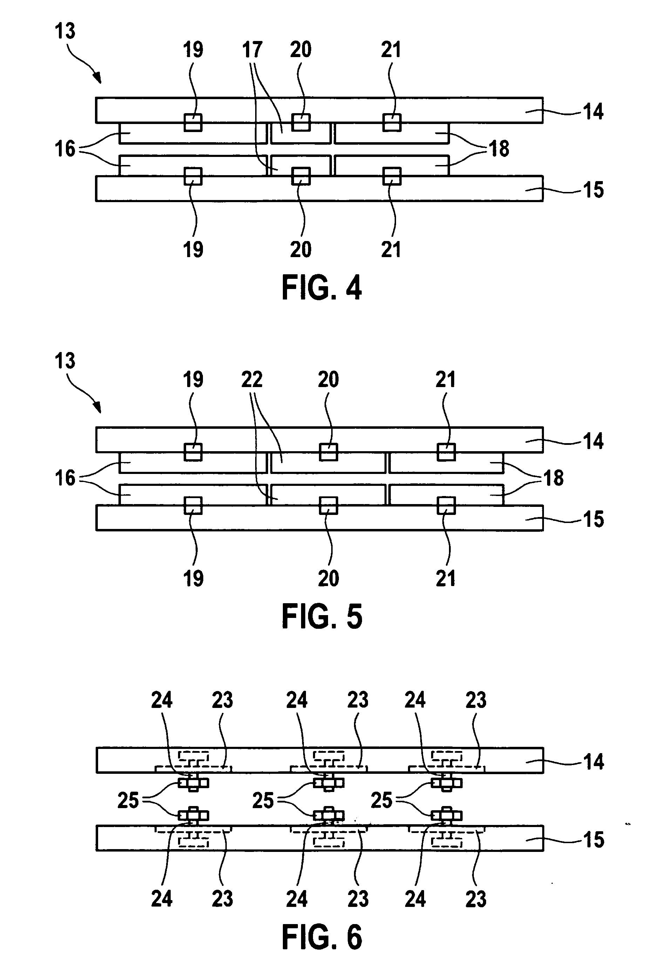

Figur 4 zeigt in einer schematischen Darstellung den Aufbau eines Stanzwerkzeugs 13 mit einer oberen und einer unteren Druckplatte 14, 15. An der oberen Druckplatte 14, 15 sind ein erstes, ein zweites und ein drittes Stanzwerkzeugteil 16, 17, 18 über erste, zweite bzw. dritte Befestigungsmittel 19, 20, 21 befestigt. Jedes Stanzwerkzeugteil umfasst ein oberes und ein unteres Stanzwerkzeugteil. Das obere Stanzwerkzeugteil ist mit der oberen Druckplatte 14 und das untere Stanzwerkzeugteil ist mit der unteren Druckplatte 15 verbunden. Beim Formvorgang wird von einem zugeordneten oberen und unteren Stanzwerkzeugteil ein Abschnitt des Befestigungsteils geformt. Die Stanzwerkzeugteile 16, 17, 18 sind nur schematisch dargestellt. Die Abform- und/oder Stanzbereiche der Stanzwerkzeugteile 16, 17, 18, 22 sind entsprechend ausgebildet, um die Herstellung wenigstens einer Rohform des Befestigungsteils 1, vorzugsweise der Form des Befestigungsteils, wie in Figur 1 dargestellt, aus einer Blechplatte zu ermöglichen. Zudem sind hydraulische Aggregate nicht dargestellt, die die Bewegung der Druckplatten 14, 15 und eine seitliche Bewegung von Teilen der ersten Stanzwerkzeugteile 16 beispielsweise zum Einbringen der zweiten durchgehenden Öffnung 6 ermöglichen. Abhängig von der gewählten Ausführungsform kann ein Stanzwerkzeugteil nur ein oberes oder nur ein unteres Stanzwerkzeugteil umfassen.

Mit dem in Figur 4 dargestellten Stanzwerkzeug 13 kann ein erster Typ eines Befestigungsteils wie z. B. das erste Befestigungsteil 1 der Figur 2 abgeformt werden. Soll nun das dritte Befestigungsteil 8 der Figur 2 mit Hilfe des Stanzwerkzeugs 13 abgeformt werden, so ist es nur erforderlich, das zweite Stanzwerkzeugteil 17 gegen ein weiteres Stanzwerkzeugteil 22 auszutauschen und die Position des ersten und des dritten Stanzwerkzeugteils 16, 18 gegebenenfalls entsprechend anzupassen. Zum Herstellen des Befestigungsteils wird eine Blechplatte oder ein Blechstreifen zwischen die oberen und unteren Stanzwerkzeugteile 16, 17, 18 eingelegt. Dann werden die zwei Druckplatten 14, 15 zusammen gedrückt. Dadurch wird eine Grundform des Befestigungsteils 1 mit Ausbildung der ersten durchgehenden Öffnung 5, des Mittenbereichs und des Einschnitts 4 erhalten. Anschließend wird über seitlich bewegbare Teile des ersten Stanzwerkzeugteils 16 die zweite durchgehende Öffnung 6 in das Befestigungsteil 1 eingebracht. Zudem kann mithilfe des ersten Stanzwerkzeugteils 16 ein Stift 25 am Befestigungsteil 1 ausgeformt werden, der zur Befestigung einer Vorspannfeder des Trägerarms dient, wie in Figur 1 dargestellt ist.

Ein entsprechend angepasstes Stanzwerkzeugteil 13 mit einem weiteren zweiten Stanzwerkzeugteil 22 ist in Figur 5 dargestellt. Somit ist es für die Herstellung von zwei unterschiedlich langen Befestigungsteilen 1, 8 für einen Wischarm eines Scheibenwischers nur erforderlich, das zweite Stanzwerkzeugteil 17 gegen ein weiteres zweites Stanzwerkzeugteil 22 auszutauschen und die Position des ersten und des dritten Stanzwerkzeugteils 16, 18 entsprechend anzupassen.

Die ersten, zweiten und dritten Befestigungsmittel 19, 20, 21 können in Form von Langlöchern in die Druckplatten 14, 15 und in den Stanzwerkzeugteilen 16, 17, 18, 22 ausgebildet sein.

Das zweite und das weitere zweite Stanzwerkzeugteil 17, 22 können sich beispielsweise nur in der Länge entlang der Längsachse des Befestigungsteils oder auch in anderen Dimensionen wie z. B. der Breite des abzuformenden Befestigungsteils 1 oder der Form des abzuformenden Befestigungsteils 1 unterscheiden.

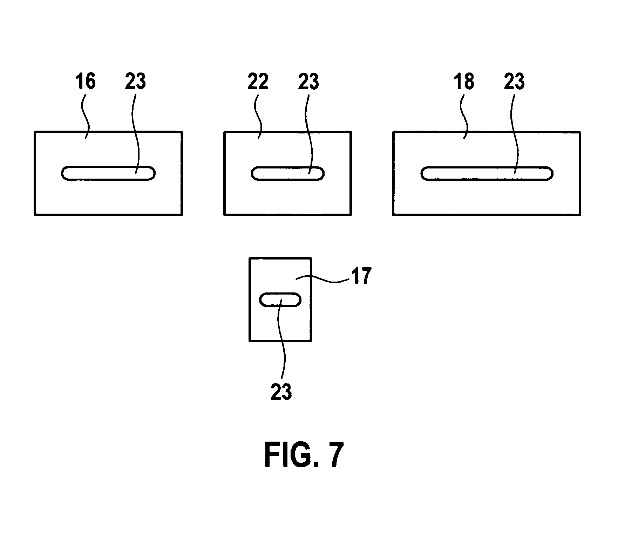

Figur 6 zeigt eine schematische Darstellung der Druckplatten 14, 15 mit Langlöchern 23, in denen Schrauben 24 mit Muttern 25 angeordnet sind. In entsprechender Weise weisen das erste, zweite, dritte und weitere zweite obere und untere Stanzwerkzeugteil 16, 17, 18, 22 ebenfalls Langlöcher 23 auf, wie in Figur 7 anhand vom oberen ersten, zweiten, dritten und weiteren zweiten Stanzwerkzeugteil 16, 17, 18, 22 dargestellt ist.

## Patentansprüche

1. Stanzwerkzeug (13) mit Druckplatten (14, 15) mit Befestigungsmitteln (19, 20, 21) zum Befestigen von mindestens drei Stanzwerkzeugteilen (16, 17, 18, 22), wobei die Stanzwerkzeugteile (16, 17, 18) zum Formen eines Befestigungsteils (1) eines Wischarms eines Scheibenwischersystems vorgesehen sind, wobei ein erstes Stanzwerkzeugteil (16) zum Formen eines ersten Endes des Befestigungsteils (1), ein zweites Stanzwerkzeugteil (17) zum Formen eines Mittelbereichs des Befestigungsteils (1) und ein drittes Stanzwerkzeugteil (18) zum Formen eines zweiten Endes des Befestigungsteils (1) vorgesehen ist, **dadurch gekennzeichnet, dass** die Befestigungsmittel (19, 20, 21) in der Weise ausgebildet sind, dass das zweite Stanzwerkzeugteil (17) lösbar und gegen ein weiteres zweites Stanzwerkzeugteil (22) austauschbar ist, das unterschiedlich zum zweiten Stanzwerkzeugteil (17) ausgebildet ist.

2. Stanzwerkzeug nach Anspruch 1, wobei die Befestigungsmittel (19, 21) und/oder das erste und das dritte Stanzwerkzeugteil (16, 18) so ausgebildet sind, dass das erste und/oder das dritte Stanzwerkzeugteil (16, 18) in der Lage zueinander veränderbar sind.

3. Stanzwerkzeug nach Anspruch 2, wobei die Befestigungsmittel (19, 21) und/oder das erste und das dritte Stanzwerkzeugteil (16, 18) so ausgebildet sind, dass das erste und das dritte Stanzwerkzeugteil (16, 18) in der Lage veränderbar sind, um einen Abstand zwischen dem ersten und dritten Stanzwerkzeugteil (16, 18) zu vergrößern, und wobei das weitere zweite Stanzwerkzeugteil (22), das länger als das zweite Stanzwerkzeugteil (17) ist, anstelle des zweiten Stanzwerkzeugteils (17) zwischen dem ersten und dem dritten Stanzwerkzeugteil (16, 18) montierbar ist.

4. Stanzwerkzeug nach einem der Ansprüche 1 bis 3, wobei das erste und das dritte Stanzwerkzeugteil (16, 18) ausgebildet sind, um eine durchgehende Öffnung (5, 6) in das Befestigungsteil (1) zu formen.

5. Stanzwerkzeug nach einem der Ansprüche 1 bis 4, wobei das zweite und das weitere zweite Stanzwerkzeugteil (17, 22) sich nur in der Länge entlang einer Längsachse des Befestigungsteils (1) unterscheiden.

6. Stanzwerkzeug nach einem der Ansprüche 1 bis 5, wobei das erste Stanzwerkzeugteil (16) ausgebildet ist, um die zweite durchgehende Öffnung (6) in das Befestigungsteil (1) zu formen.

7. Verfahren zum Herstellen von unterschiedlich ausgebildeten Befestigungsteilen eines Wischarms mit einem Stanzwerkzeug mit Druckplatten mit Befestigungsmitteln zum Befestigen von mindestens drei Stanzwerkzeugteilen, wobei die Stanzwerkzeugteile zum Stanzen des Befestigungsteils vorgesehen sind, wobei das erste Stanzwerkzeugteil zum Formen eines ersten Endbereichs des Befestigungsteils, das zweite Stanzwerkzeugteil zum Formen eines Mittelbereichs des Befestigungsteils und das dritte Stanzwerkzeugteil zum Formen eines zweiten Endbereichs des Befestigungsteils vorgesehen ist, **dadurch gekennzeichnet, dass** die Befestigungsmittel und das zweite Stanzwerkzeugteil in der Weise ausgebildet sind, dass das zweite Stanzwerkzeugteil lösbar und gegen ein viertes Stanzwerkzeugteil austauschbar ist, wobei eine Platte in das Stanzwerkzeug eingelegt ist und mit dem Stanzwerkzeug das Befestigungsteil hergestellt wird, wobei zum Herstellen eines weiteren Befestigungsteils, das unterschiedlich zum Befestigungsteil ist, das zweite Stanzwerkzeugteil gegen ein weiteres zweites Stanzwerkzeugteil ausgetauscht wird, und wobei eine weitere Platte in das Stanzwerkzeug eingelegt wird und das weitere Befestigungsteil mit dem Stanzwerkzeug hergestellt wird.

8. Verfahren nach Anspruch 7, wobei das zweite und das dritte Befestigungsteil nur in einer Dimension, insbesondere in der Länge entlang einer Längsachse des Befestigungsteils unterschiedlich sind.

## Claims

1. Stamping die (13) having pressure plates (14, 15) with fastening means (19, 20, 21) for fastening at least three stamping-die parts (16, 17, 18, 22), the stamping-die parts (16, 17, 18) being provided for forming a fastening part (1) of a wiping arm of a windscreen wiper system, a first stamping-die part (16) being provided for forming a first end of the fastening part (1), a second stamping-die part (17) being provided for forming a central region of the fastening part (1), and a third stamping-die part (18) being provided for forming a second end of the fastening part (1), **characterized in that** the fastening means (19, 20, 21) are configured in such a way that the second stamping-die part (17) is releasable and can be exchanged for a further second stamping-die part (22) which is configured differently to the second stamping-die part (17).

2. Stamping die according to Claim 1, the fastening means (19, 21) and/or the first and the third stamping-die parts (16, 18) being configured in such a way that the first and/or the third stamping-die part (16, 18) can have their/its position with respect to one another varied.

3. Stamping die according to Claim 2, the fastening means (19, 21) and/or the first and the third stamping-die parts (16, 18) being configured in such a way that the first and the third stamping-die parts (16, 18) can have their position varied, in order to increase a spacing between the first and the third stamping-die parts (16, 18), and it being possible for the further second stamping-die part (22) which is longer than the second stamping-die part (17) to be mounted, instead of the second stamping-die part (17), between the first and the third stamping-die parts (16, 18).

4. Stamping die according to one of Claims 1 to 3, the first and the third stamping-die parts (16, 18) being configured to form a continuous opening (5, 6) into the fastening part (1).

5. Stamping die according to one of Claims 1 to 4, the second and the further second stamping-die parts (17, 22) differing only in their length along a longitudinal axis of the fastening part (1).

6. Stamping die according to one of Claims 1 to 5, the first stamping-die part (16) being configured to form the second continuous opening (6) into the fastening part (1).

7. Method for producing differently configured fastening parts of a wiping arm having a stamping die with pressure plates with fastening means for fastening at least three stamping-die parts, the stamping-die parts being provided for stamping the fastening part, the first stamping-die part being provided for forming a first end region of the fastening part, the second stamping-die part being provided for forming a central region of the fastening part, and the third stamping-die part being provided for forming a second end region of the fastening part, **characterized in that** the fastening means and the second stamping-die part are configured in such a way that the second stamping-die part is releasable and can be exchanged for a fourth stamping-die part, a plate being inserted into the stamping die and the fastening part being produced by way of the stamping die, the second stamping-die part being exchanged for a further second stamping-die part in order to produce a further fastening part which is different from the fastening part, and a further plate being inserted into the stamping die and the further fastening part being produced by way of the stamping die.

8. Method according to Claim 7, the second and the third fastening parts being different only in one dimension, in particular in their length along a longitudinal axis of the fastening part.

## Revendications

1. Outil d'estampage (13) doté de plaques de pression (14, 15) comprenant des moyens de fixation (19, 20, 21) pour la fixation d'au moins trois parties d'outil d'estampage (16, 17, 18, 22), les parties d'outil d'estampage (16, 17, 18) étant prévues pour la formation d'une pièce de fixation (1) d'un bras d'essuie-glace d'un système d'essuie-glace, une première partie d'outil d'estampage (16) étant prévue pour la formation d'une première extrémité de la pièce de fixation (1), une deuxième partie d'outil d'estampage (17) étant prévue pour la formation d'une région centrale de la pièce de fixation (1) et une troisième partie d'outil d'estampage (18) étant prévue pour la formation d'une deuxième extrémité de la pièce de fixation (1), **caractérisé en ce que** les moyens de fixation (19, 20, 21) sont réalisés de telle sorte que la deuxième partie d'outil d'estampage (17) soit amovible et puisse être remplacée par une deuxième partie d'outil d'estampage supplémentaire (22) qui est réalisée différemment de la deuxième partie d'outil d'estampage (17).

2. Outil d'estampage selon la revendication 1, dans lequel les moyens de fixation (19, 21) et/ou la première et la troisième partie d'outil d'estampage (16, 18) sont réalisés de telle sorte que les positions l'une par rapport à l'autre de la première et/ou de la troisième partie d'outil d'estampage (16, 18) puissent être modifiées.

3. Outil d'estampage selon la revendication 2, dans lequel les moyens de fixation (19, 21) et/ou la première et la troisième partie d'outil d'estampage (16, 18) sont réalisés de telle sorte que les positions de la première et de la troisième partie d'outil d'estampage (16, 18) puissent être modifiées, afin d'accroître une distance entre la première et la troisième partie d'outil d'estampage (16, 18), et la deuxième partie d'outil d'estampage supplémentaire (22), qui est plus longue que la deuxième partie d'outil d'estampage (17), pouvant être montée à la place de la deuxième partie d'outil d'estampage (17) entre la première et la troisième partie d'outil d'estampage (16, 18).

4. Outil d'estampage selon l'une quelconque des revendications 1 à 3, dans lequel la première et la troisième partie d'outil d'estampage (16, 18) sont réalisées afin de former une ouverture traversante (5, 6) dans la pièce de fixation (1).

5. Outil d'estampage selon l'une quelconque des revendications 1 à 4, dans lequel la deuxième partie d'outil d'estampage et la deuxième partie d'outil d'estampage supplémentaire (17, 22) ne diffèrent que par leur longueur le long d'un axe longitudinal de la pièce de fixation (1).

6. Outil d'estampage selon l'une quelconque des revendications 1 à 5, dans lequel la première partie d'outil d'estampage (16) est réalisée afin de former la deuxième ouverture traversante (6) dans la pièce de fixation (1).

7. Procédé de fabrication de pièces de fixation réalisées différemment d'un bras d'essuie-glace à l'aide d'un outil d'estampage doté de plaques de pression comprenant des moyens de fixation pour la fixation d'au moins trois parties d'outil d'estampage, les parties d'outil d'estampage étant prévues pour l'estampage de la pièce de fixation, la première partie d'outil d'estampage étant prévue pour la formation d'une première région d'extrémité de la pièce de fixation, la deuxième partie d'outil d'estampage étant prévue pour la formation d'une région centrale de la pièce de fixation, et la troisième partie d'outil d'estampage étant prévue pour la formation d'une deuxième région d'extrémité de la pièce de fixation, **caractérisé en ce que** les moyens de fixation et la deuxième partie d'outil d'estampage sont réalisés de telle sorte que la deuxième partie d'outil d'estampage soit amovible et puisse être remplacée par une quatrième partie d'outil d'estampage, une plaque étant introduite dans l'outil d'estampage, et la pièce de fixation étant fabriquée à l'aide de l'outil d'estampage, la deuxième partie d'outil d'estampage étant remplacée par une deuxième partie d'outil d'estampage supplémentaire pour la fabrication d'une autre pièce de fixation qui est différente de la pièce de fixation, et une autre plaque étant introduite dans l'outil d'estampage et l'autre pièce de fixation étant fabriquée à l'aide de l'outil d'estampage.

8. Procédé selon la revendication 7, dans lequel la deuxième et la troisième pièce de fixation ont seulement une dimension différente, en particulier la longueur le long d'un axe longitudinal de la pièce de fixation.
